(19) Europäisches Patentamt
European Patent Office
Office européen des brevets

(11) Veröffentlichungsnummer: **0 185 898**
**A2**

(12) # EUROPÄISCHE PATENTANMELDUNG

(21) Anmeldenummer: 85114033.5

(22) Anmeldetag: 05.11.85

(51) Int. Cl.[4]: **C 08 G 4/00**
C 07 C 43/315, C 11 D 3/37

(30) Priorität: 14.11.84 DE 3441542

(43) Veröffentlichungstag der Anmeldung:
02.07.86 Patentblatt 86/27

(84) Benannte Vertragsstaaten:
CH FR GB LI NL

(71) Anmelder: Heiss, Bernhard Rudolf
Isabellastrasse 22
D-8000 München 40(DE)

(72) Erfinder: Heiss, Lorenz, Dr.
Stormstrasse 39
D-6238 Hofheim a. Ts.(DE)

(54) **Grenzflächenaktive Polyglykolätheracetale.**

(57) Polyglykoletheracetale der Formel

$$RO\left[(C_2H_4O)_x-\underset{R_1}{\underset{|}{CH}}-O\right]_Z(C_2H_4O)_y-R_2$$

worin R und $R_2$ Wasserstoff, $C_5$-$C_{30}$-, vorzugsweise $C_8$-$C_{18}$-Alkyl, Aryl oder Alkylaryl mit jeweils insgesamt 6-30, vorzugsweise 6-20 C-Atomen, $R_1$ $C_2$-$C_{20}$-Alkyl oder $C_6$-$C_{20}$-Alkylaryl, oder den Rest

$$RO\left[(C_2H_4O)_x-\underset{|}{CH}-O\right]_Z(C_2H_4O)_y-R_2$$

x und y eine ganze Zahl von 5 bis 20 und z eine ganze Zahl von 1 bis 10 bedueten. Diese Acetale die nach dem üblichen Verfahren aus einem Aldehyd und Alkoholen hergestellt werden, eignen sich als Tenside.

EP 0 185 898 A2

Grenzflächenaktive Polyglykolätheracetale

Aus Tenside Detergents 15 (1978), S. 68-71 sind bereits Acetale aus aliphatischen Aldehyden und Polyethylenglykolmonoalkylethern bekannt, die im Molekül insgesamt 3 bis 8 C-Atome enthalten. In EP-A 54 366 sind Acetale beschrieben aus $C_{12}$-$C_{20}$-aliphatischen Aldehyden und $C_1$-$C_4$-Monoalkylethern von Polyalkylenoxiden mit 1 bis 15 Alkylenoxid-Gruppen.

Gegenstand der Erfindung sind neue grenzflächenaktive Polyglykoletheracetale der Formel

$$RO-\left[(C_2H_4O)_x-\underset{R_1}{\underset{|}{CH}}-O\right]_Z-(C_2H_4O)_y-R_2$$

worin R und $R_2$ Wasserstoff, $C_5$-$C_{30}$-, vorzugsweise $C_8$-$C_{18}$-Alkyl, Aryl oder Alkylaryl mit jeweils insgesamt 6-30, vorzugsweise 6-20 C-Atomen, $R_1$ $C_2$-$C_{20}$-Alkyl oder $C_6$-$C_{20}$-Alkylaryl, oder den Rest

$$RO-\left[(C_2H_4O)_x-\underset{|}{CH}-O\right]_Z-(C_2H_4)_y-R_2$$

x und y eine ganze Zahl von 5 bis 20 und Z eine ganze Zahl von 1 bis 10 bedeuten. Die Polyglykoletheracetale der obigen Formel werden hergestellt, indem man Alkohole der Formel

$$RO-(C_2H_4O)_xH \text{ bzw. } R_2O(C_2H_4O)_yH$$

mit einem Aldehyd der Formel

$$R_1-CHO$$

in einem Lösemittel und in Gegenwart von Säuren als Katalysatoren erhitzt und das Reaktionswasser auskreist. Vorzugsweise wird die Reaktion bei der Siedetemperatur des Lösemittels durchgeführt und das Reaktionswasser wird durch azeotrope Destillation entfernt. Als Säuren verwendet man beispielsweise Schwefelsäure, p-Toluolsulfonsäure oder Wasserstoff-Ionenaustauscher in einer Konzentration von 0,5 bis 2 %. Man benötigt auf ein Mol Aldehyd zwei alkoholische Hydroxylgruppen, wobei es vorteilhaft ist, einen Überschuß an Aldehyd zu nehmen, um einen quantitativen Umsatz zum Acetal zu erhalten.

Für die den erfindungsgemäßen Acetalen zugrundeliegenden Aldehyde seien beispielsweise Glyoxal, Propionaldehyd, n-Butyraldehyd, Valeraldehyd, 2-Äthylhexylaldehyd, Isooctylaldehyd, Isononaldehyd, Isotridecylaldehyd, Benzaldehyd, Tolylaldehyd genannt, während für die entsprechenden Alkohole Polyäthylenglykole vom Molgewicht 200 bis 2000, lineare oder verzweigte Fettalkohole mit 5 bis 30 Kohlenstoffatomen und 5 bis 20 Äthylenoxydgruppen sowie Phenol, Naphthol und Alkylphenole mit 6 bis 30 C-Atomen in Frage kommen.

Die neuen grenzflächenaktiven Polyglykolätheracetale sind vielfältig einsetzbare Tenside beispielsweise als Netzmittel, Färbereihilfsmittel , Emulgatoren und Demulgatoren wie sie bei der Erdölförderung als Spalter von Erdölemulsionen Verwendung finden. Als Schwachschäumer mit vollständiger biologischer Abbaubarkeit können sie vor allem als alkalistabile Reiniger und Spülmittel Verwendung finden.

Beispiel 1

60 g (0,3 Mol) Isotridecylaldehyd und 136 g (0,34 Mol) Ethylenglykolpolyglykolether vom Molgewicht 400 werden zusammen mit 10 g stark saurem Kationenaustauscher in der $H^{+}$-Form in 300 ml Toluol unter Rückfluß erhitzt und dabei durch azeotrope Destillation das Reaktionswasser (5,4 g) ausgekreist.

Man erhält nach Filtration vom Kationenaustauscher und Entfernung des Lösungsmittels in fast quantitativer Ausbeute 174 g des Acetals des Isotridecylaldehyds und des Ethylenglykolpolyglykolethers folgender Konstitution:

$$HO-\left[(C_2H_4O)_9-\underset{\displaystyle C_{12}H_{25}}{\underset{|}{CH}}-O\right]_6-(C_2H_4O)_9-H$$

Die osmometrische Molgewichtsbestimmung ergab ein Mol von 3400 (das theoretische Mol 3670). Der als Acetal gebundene Isotridecylaldehyd betrug 36 % (Theorie 37,8 %).

Beispiel 2

23,4 g (0,165 Mol) Isononylaldehyd und 154 g (0,3 Mol) Isotridecyl-polethylenglykolether mit 8 Äthylenoxydgruppen vom Molgewicht 515 werden zusammen mit 5,2 g (0,03 Mol) p-Toluolsulfosäure in 300 ml Toluol unter Rückfluß erhitzt und dabei durch azeotrope Destillation das Reaktionswasser (5,4 g) ausgekreist. Mit 1,6 g Natriummethylat neutralisiert man, filtriert und entfernt das Lösungsmittel. Man erhält in fast quantitativer Ausbeute 170 g des Acetals des Isononylaldehyds und des Isotridecylalkoholaddukts mit 8 Ethylenoxydgruppen folgender Konstitution:

$$C_{13}H_{27}O-(C_2H_4O)_8-\underset{\displaystyle C_8H_{17}}{\underset{|}{CH}}-(OC_2H_4)_8-OC_{13}H_{27}$$

Der als Acetal gebundene Isononylaldehyd beträgt 11,2 % (Theorie 12,3 %),

Beispiel 3

128 g (0,2 Mol) Isotridecyl-polyethylenglykolether mit acht Ethylenoxydgruppen vom Molgewicht 1280 und 28,8 (0,4 Mol) n-Butyraldehyd werden in 300 ml Methylenchlorid zusammen mit 20 g stark saurem Kationenaustauscher in der $H^+$-Form unter Rückfluß erhitzt und durch azeotrope Destillation das Reaktionswasser entfernt. Man erhält nach Filtration vom Kationenaustauscher und Entfernung des Lösungsmittels quantitativ 133 g des Butyrals aus dem Isotridecanoladdukt mit acht Äthylenoxydgruppen der Formel:

$$C_{13}H_{27}O-(C_2H_4O)_8-\underset{\displaystyle C_3H_7}{\underset{|}{CH}}-(OC_2H_4)_8-OC_{13}H_{27}$$

Der als Acetal gebundene n-Butyraldehyd beträgt 5,4 (Theorie 5,5 %).

Beispiel 4

145 g (0,2 Mol) Isotridecyl-polyethylenglykolether mit 12 Ethylenoxydgruppen und 11,7 g (0,11 Mol) Benzaldehyd werden in 300 ml Toluol zusammen mit 20 g stark saurem Kationenaustauscher in der $H^+$-Form unter Rückfluß erhitzt und durch azeotrope Destillation das Reaktionswasser entfernt. Man erhält nach Filtration und Entfernung des Lösungsmittels 152 g des Acetals aus Benzaldehyd und dem Isotridecanoladdukt mit Ethylenoxydgruppen der Formel:

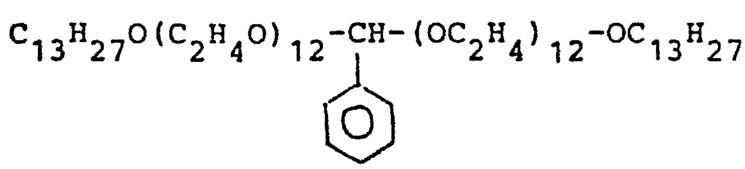

Der als Acetal gebundene Benzaldehyd beträgt 6,5 % (Theorie 6,9 %).

PATENTANSPRÜCHE:

1. Polyglykoletheracetale der Formel

$$RO\left[(C_2H_4O)_x-\underset{R_1}{CH}-O\right]_z(C_2H_4O)_y-R_2$$

worin R und $R_2$ Wasserstoff, $C_5$-$C_{30}$-, vorzugsweise $C_8$-$C_{18}$-Alkyl, Aryl oder Aralkyl mit jeweils ingesamt 6 bis 30, vorzugsweise 6 bis 20 C-Atomen, $R_1$ $C_2$-$C_{20}$-Alkyl oder $C_6$-$C_{20}$-Alkylaryl oder den Rest

$$RO\left[(C_2H_4O)_x-\underset{|}{CH}-O\right]_z(C_2H_4O)_y-R_2$$

x und y eine ganze Zahl von 5 bis 20 und z eine ganze Zahl von 1 bis 10 bedeuten.

2. Verfahren zur Herstellung der Polyglykoletheracetale nach Anspruch 1, dadurch gekennzeichnet, daß man Alkohole der Formel

$$RO-(C_2H_4O)_xH \text{ bzw. } R_2O-(C_2H_4O)_yH$$

mit einem Aldehyd der Formel

$$R_1-CHO$$

in einem Lösemittel und in Gegenwart von Säuren als Katalysator erhitzt und das Reaktionswasser auskreist.

3. Verwendung der Polyglykoletheracetale nach Anspruch 1 als Tenside.